# EUROPEAN PATENT SPECIFICATION

(11) **EP 4 480 625 B1**
(45) Date of publication and mention of the grant of the patent: **15.04.2026**
(21) Application number: 24184107.1
(22) Date of filing: 24.06.2024
(51) Int. Cl.: B23K 23/00, B23K 101/38

(54) **EXOTHERMIC WELDING CONTAINER AND A METHOD OF FORMING AN EXOTHERMIC WELD**
EXOTHERMISCHER SCHWEISSBEHÄLTER UND VERFAHREN ZUR HERSTELLUNG EINER EXOTHERMISCHEN SCHWEISSUNG
CONTENEUR DE SOUDAGE EXOTHERMIQUE ET PROCÉDÉ DE FORMATION D'UNE SOUDURE EXOTHERMIQUE

(30) Priority: 23.06.2023 US 202363509875 P
(43) Date of publication of application: 25.12.2024
(73) Proprietor: Erico International Corporation, Solon, OH 44139 (US)
(72) Inventor: Turner, Nicholas, North Royalton (US); Reape, Kevin, Solon (US); Bendlak, Thomas E., Madeconia (US)
(74) Representative: Barker Brettell LLP

(56) References cited:
- CN-U- 206 966 869
- CN-U- 212 526 478
- US-A- 3 234 603
- US-A- 3 554 270

## Description

The present invention relates to an exothermic welding container and to a method of forming an exothermic weld, as defined in claims 1 and 10.

### BACKGROUND

Exothermic welding can be used in different settings to form high quality, high ampacity, and low resistance electrical connections between different conductors (e.g., grounding electrode conductors or bonding conductors) and conductors to a grounding electrode or a point on a grounding electrode system. US3554270A discloses a metal casting apparatus and method for joining metal reinforcing bars, in which metal melted in a graphite crucible passes into a recess in a graphite pouring block, into an exit portion of a passage, and into a steel sleeve to be joined.

In general, an exothermic welding process can provide a bond with a current carrying capacity substantially equal to that of the conductors themselves. Further, exothermic welds can be relatively durable and long-lasting, and can avoid problems of loosening and corrosion that can occur for mechanical and compression joints. As a result of these benefits, exothermic weld connections are widely used in electrical grounding and bonding systems and other settings to enable connected sets of conductors, or connections between a conductor and another point on the grounding electrode system, to operate, effectively, as a continuous conductor with relatively low resistivity.

### SUMMARY

The present invention relates to exothermic welding and provides improved assemblies for exothermic welding operations.

According to a first aspect of the present invention, an exothermic welding container is defined in claim 1, the container including:
a first container piece, integrally formed, that can internally define a first weld cavity and a second container piece that is integrally formed. The second container piece can internally define a crucible chamber with an upper opening to receive weld material for exothermic reaction within the crucible chamber. A tap hole can extend from a lower end of the crucible chamber and defines a tap hole width, and a second weld cavity portion. The second weld cavity portion can include a riser section and a lower section. The riser section can extend from a lower end of the tap hole toward the lower section with an inward taper from an upper riser width toward the lower section. In an open configuration, the first and second container pieces can be separable, in which at least one of the first weld cavity portion or the second weld cavity portion can be open to receive one or more conductors. In an assembled configuration, the first and second container pieces can be aligned so that the first and second weld cavity portions collectively define a weld cavity of the exothermic welding container in the crucible chamber that can receive and contain molten metal from reaction of the weld material, with one or more conductor channels extending into one or more of the first container piece or the second container piece to intersect the weld cavity.

The exothermic welding container can be a substantially-horizontal (or horizontal) split welding container with the first container piece being a lower container piece and the second container piece being an upper container piece. In some examples, the one or more conductor channels may include a plurality of conductor channels. In some examples, the plurality of conductor channels can include parallel conductor channels. In some examples, the plurality of conductor channels can include a substantially vertical conductor channel. In some examples, along a vertical cross section, the riser section has a trapezoidal cross-sectional shape. In some examples, along the vertical cross section, the lower section has a rectangular cross-sectional shape. In some examples, a centerline of the riser section may extend between the tap hole and the lower section at an angle greater than zero, relative to vertical.

Some examples provide an exothermic welding container that may include one or more mold pieces. The one or more mold pieces can define a crucible chamber, a weld cavity, a tap hole, and a set of one or more channels. The tap hole can extend between the crucible chamber and the weld cavity to transfer molten metal by gravity from the crucible chamber to the weld cavity. The set of one or more channels can intersect the weld cavity, spaced apart from the tap hole. The weld cavity can have a width that increases over a vertical rise away from the set of one or more channels.

In some examples, the weld cavity may include a riser section with a trapezoidal cross-sectional shape as viewed perpendicularly to vertical. In some examples, the weld cavity can include a lower section with a rectangular cross-sectional shape as viewed perpendicularly to vertical. In some examples, the exothermic welding container can be an integral container. In some examples, the one or more mold pieces may include a first mold piece and a second mold piece that may be separated along one or more split planes. In some examples, the one or more split planes may include a substantially horizontal (or horizontal) split plane that intersects one or more channels of the set.

Some examples provide an exothermic welding container that may include a weld cavity with a top section and a bottom section, and a tap hole that may intersect the top section of the weld cavity to convey molten metal into the weld cavity by gravity. The top section may have a width that increases over a vertical rise away from the bottom section to extend wider than the tap hole.

In some examples, the top section can have a trapezoidal cross-sectional shape as viewed perpendicularly to vertical. In some examples, the bottom section can be configured to retain the molten metal around conductors received into the weld cavity to provide a weld with a first weld width, and the top section can be configured to receive slag that is floating on the molten metal across a greater width than the first weld width. In some examples, the exothermic welding container can be a one-piece welding container.

Some examples provide an exothermic welding container that includes a crucible chamber; a weld cavity; a tap hole extending between the crucible chamber and the weld cavity; and a set of channels, including a first channel and a second channel that intersect the weld cavity, spaced apart from the tap hole. The weld cavity can have a width that increases over a vertical rise away from the set of channels.

Other examples provide an exothermic welding container that includes a weld cavity with a top section and a bottom section. The top section can have a width that increases over a vertical rise away from the bottom section.

According to a second aspect of the present invention, a method of forming an exothermic weld is defined in claim 10.

In some examples, the first container piece can be a lower container piece and the second container piece can be an upper container piece. Separating the first and second container pieces into the open configuration can include separating the first and second container pieces along a substantially-horizontal split plane. Optionally or preferably, the substantially-horizontal split plane can intersect the one or more conductor channels and the weld cavity.

In some examples, forming the weld within the weld cavity can provide a weld with a first weld width and can cause the riser section to receive slag across a greater width than the first weld width. Optionally or preferably, the riser section of the weld cavity can be a trapezoidal cross-sectional shape as viewed perpendicularly to vertical.

Features which are described in the context of separate aspects and/or embodiments of the invention may be used together and/or be interchangeable wherever possible. Similarly, where features are, for brevity, described in the context of a single embodiment, those features may also be provided separately or in any suitable sub- combination. Features described in connection with the exothermic welding container may have corresponding features definable and/or combinable with respect to a method or vice versa, and these embodiments are specifically envisaged.

### BRIEF DESCRIPTION OF THE DRAWINGS

The accompanying drawings, which are incorporated in and form a part of this specification, illustrate examples of the disclosure and, together with the description, serve to explain the principles of the disclosure:
FIG. 1 is an isometric view of an exothermic welding container according to an example of the disclosure;
FIG. 2 is an exploded isometric view of the exothermic welding container of FIG. 1;
FIG. 3 is a cross-sectional view of the exothermic welding container of FIG. 1 taken along line III-III of FIG. 1;
FIG. 4 is a cross-sectional view of the exothermic welding container of FIG. 1 taken along line IV-IV of FIG. 1;
FIG. 5 is an isometric view of an exothermic welding container according to another example of the disclosure;
FIGS. 6A and 6B are exploded isometric views of the exothermic welding container of FIG. 5;
FIG. 7 is a cross-sectional view of the exothermic welding container of FIG. 5 taken along line VII-VII of FIG. 5;
FIG. 8 is a cross-sectional view of the exothermic welding container of FIG. 5 taken along line VIII-VIII of FIG. 5;
FIG. 9 is a cross-sectional view of an exothermic welding container according to another example of the disclosure; and
FIG. 10 is a cross-sectional view of an exothermic welding container according to another example of the disclosure.

### DETAILED DESCRIPTION

Before any examples of the disclosure are explained in detail, it is to be understood that the disclosure is not limited in its application to the details of construction and the arrangement of components set forth in the following description or illustrated in the following drawings. The disclosure is capable of other examples and of being practiced or of being carried out in various ways.

The following discussion is presented to enable a person skilled in the art to make and use examples of the disclosed technology. Various modifications to the illustrated examples will be readily apparent to those skilled in the art, and the generic principles herein can be applied to other examples and applications without departing from examples of the disclosed technology. Thus, the disclosed technology is not intended to be limited to examples shown, but is to be accorded the widest scope consistent with the principles and features disclosed herein. The following detailed description is to be read with reference to the figures, in which like elements in different figures have like reference numerals. The figures, which are not necessarily to scale, depict selected examples and are not intended to limit the scope of examples of the disclosure. Skilled artisans will recognize the examples provided herein have many useful alternatives and fall within the scope of the disclosed technology.

As noted above, exothermic welding can be used to connect metal structures, such as, for example, copper conductors of an electrical system. Generally, exothermic mixtures can include a combination of a reductant metal and a transition metal oxide, which upon ignition react exothermically to supply sufficient heat to propagate and sustain a continuing reaction of the mixture. The resulting heat and molten metal can be used to create a useful weld joint, as in the case of exothermic welding.

As one example, some conventional exothermic weld material mixtures can include aluminum and copper oxide. Upon ignition, the resulting exothermic reaction can provide a mixture of molten copper and aluminum oxide. The molten copper has a higher density than the molten aluminum oxide and can accordingly be caused by gravity to flow down within a mold to weld together metal conductors (e.g., copper to copper or steel to steel). The less dense aluminum oxide (commonly referred to as "slag") separates from the denser molten copper and can generally be removed from the weld connection, or from other parts of the mold in which it may accumulate, and discarded. As another example, other conventional mixtures can include iron oxide and aluminum, which can react with similar effect.

Exothermic mixtures of this type do not react spontaneously and need a method of initiating the reaction, which involves generating enough localized energy to enable the exothermic reaction to begin. One typical method of initiating ignition is through use of a starting powder and an ignition source such as an electric igniter or a flint igniter.

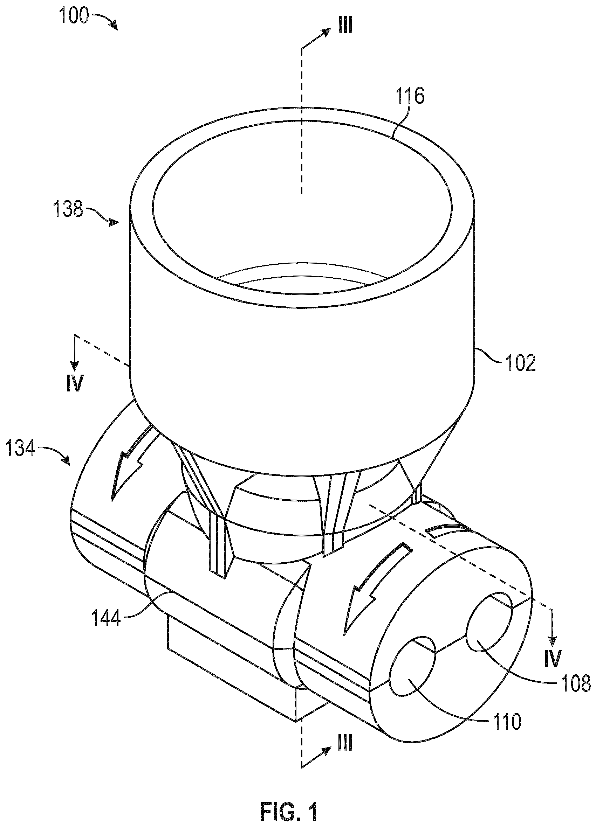

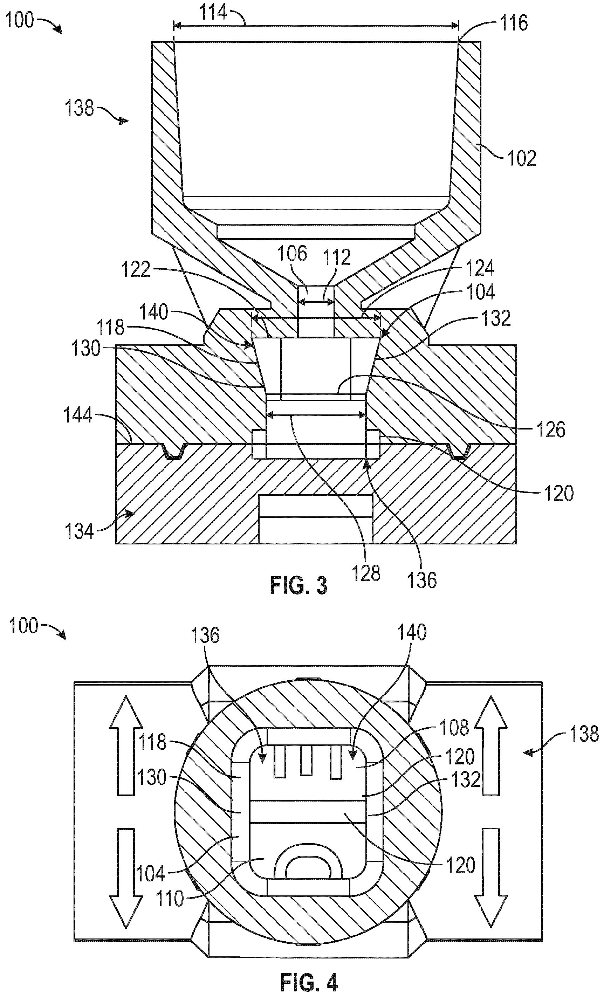

Exothermic welding containers (e.g., molds) can be provided to contain exothermic reactions, and weld conduit in a desired configuration. For example, FIGS. 1 through 4 illustrate a welding container 100. As shown, the exothermic welding container 100 has a crucible 102, a weld cavity 104 (shown in FIG. 3), a tap hole 106 (shown in FIG. 3) extending between the crucible 102 and the weld cavity 104, and a set of channels here shown as a first channel 108 and a second channel 110.

In some examples, the welding container 100 can be formed through a three-dimensional printing process such as, for example, binder jetting. Binder jetting is an additive manufacturing process that deposits a liquid binding agent onto a layer of powder particles (e.g., sand, ceramics, graphite, metal, or composites) to build a part layer-by-layer. This manufacturing process permits the forming of the welding container 100 as a singular, unitary, piece, according to a predetermined design, without requiring the extra step of removing material to form the internal negative features. Further, particular geometries may be possible with additive manufacturing (e.g., for single-piece or vertical split molds) that may not be possible with other approaches.

In some examples, it can be preferable to form the welding container 100 from a material that can be broken after the welding process takes place (e.g., ceramic, graphite, etc.). This form of welding container can be referred to as a single-use or "one-shot" mold, whereby after the welding process is complete, an operator can smash the welding container with a hammer, for example, to break the welding container to expose the weld and welded joint. However, multi-use configurations of the welding containers formed from suitable materials (e.g., graphite or other carbon based material) are also contemplated.

According to the present invention, the welding container 100 is shown as a two-piece design split along a longitudinal direction of the first and second channels 108, 110 to form a first container piece 134 (e.g., mold piece) and a second container piece 138. The container pieces 134, 138 are separated to receive one or more conductors, and are assembled together for a welding operation.

In the illustrated example, container pieces 134, 138 are separable along a horizontal split plane 144, and thus form a horizontal split welding container 100. Correspondingly, in this and other examples, the first container piece 134 is a lower container piece and the second container piece 138 is an upper container piece. The first container piece 134 and the second container piece 138 are according to the present invention integrally formed.

A two-piece mold can be advantageous in situations in which at least one of the electrical conductors to be welded is already terminated at a termination point or otherwise installed so as to be prevented from a "stabbing" insertion through the relevant channel 108, 110. This allows the welding container 100 to be placed at any point along the at least one electrical conductor. If not split, an operator would need to disconnect the at least one electrical conductor from the termination point. Correspondingly, in an open configuration of the welding container 100, the first weld cavity portion 136 and the second weld cavity portion 140 are open to receive one or more corresponding conductors.

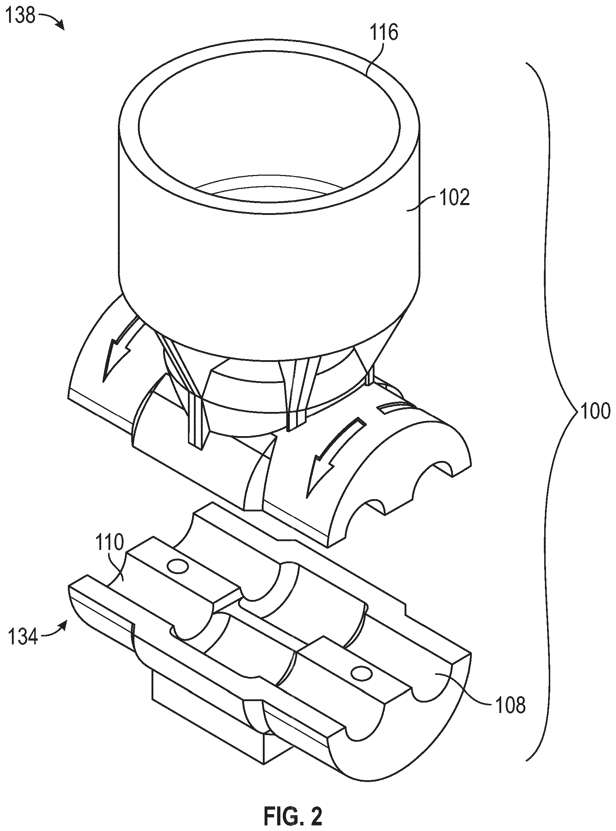

Creating a two-piece welding container as shown can be accomplished by molding the two pieces individually or by cutting, or otherwise splitting, a one-piece welding container at the preferred location after it is formed (e.g., in either case with the piece(s) formed using additive manufacturing). In some examples, the welding container 100 is cut horizontally across the set of channels, as shown. In other words, a split plane for a multi-piece welding container can intersect one or more conductor channels in some cases. In some examples, one or more of such intersected conductor channels may be substantially vertical, or may be in a "T" or other non-parallel configuration with one or more other conductor channels. In some examples of a horizontally split weld container, in particular, the conductor channels are parallel conductor channels (e.g., as shown in FIG. 2). However, it should be noted that other configurations of the channels in a horizontal split weld container are contemplated.

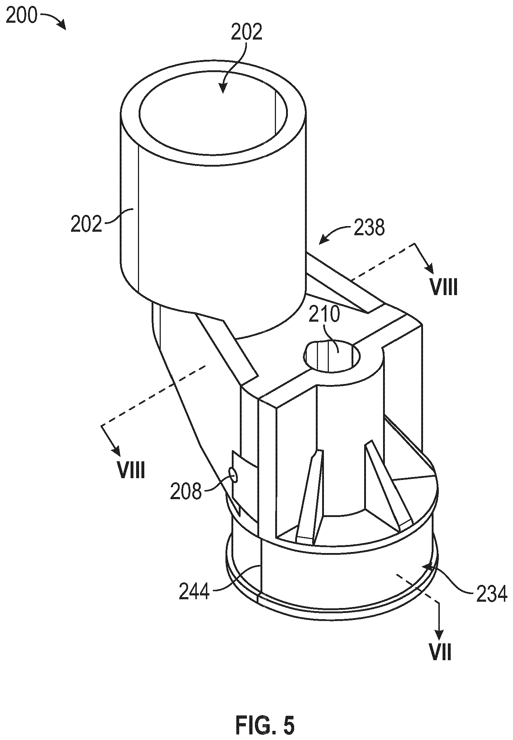

In other examples, a welding container can be cut vertically along a vertical split plane (e.g., a welding container 200 as shown in FIGS. 5 through 8 and discussed further below). In examples cut along a vertical split plane, the conductor channel(s) may be substantially horizontal, substantially vertical, or in a "T" configuration or other non-parallel configuration. In some examples of a vertically split weld container, the conductor channels are parallel conductor channels. However, it should be noted that other configurations of the channels in a vertical split weld are contemplated. In some examples, a welding container can be separable along multiple split planes (e.g., an integrally formed welding container can be cut along both horizontal and vertical split planes).

It should be understood that other configurations of the set of channels are contemplated. For example, the channels can be arranged in a parallel formation as shown, a "T" formation, a "plus" or cross formation, or other formations as determined necessary for the items to be welded together. Further, in some examples the set of channels can have channels of different dimensions (i.e., diameters, heights, widths, etc.) or shapes (e.g., circular or rectangular cross-sections) depending on the items being joined through the welding process.

Looking at FIG. 3, a cross-section of the welding container 100 is shown as taken along line III-III of FIG. 1. The first container piece 134 includes a first weld cavity portion 136. The second container piece 138 includes a second weld cavity portion 140, a tap hole 106, and the crucible chamber 102. The first weld cavity portion 136 and second weld cavity portion 140, in an assembled configuration, define the weld cavity 104. The crucible chamber 102 is provided in an upper portion of the welding container 100. The crucible chamber 102 tapers inward as it approaches the tap hole 106, which 106 extends from a lower end of the crucible chamber 10. The inward taper of the crucible chamber 102 enables the molten material to move more by gravity easily toward and into the tap hole 106.

In the illustrated example, the tap hole 106 is cylindrical with a constant diameter. The tap hole 106 has a tap hole width (e.g., diameter) 112, that is smaller than a width (e.g., diameter) 114, of an opening 116 of the crucible chamber 102 that can receive welding material. Generally, the size difference may aid in the separation of the molten copper and the slag as they travel down to the weld cavity 104 due to their different densities. Other configurations of the tap hole 106 are contemplated, however, including, for example, a tapered design that may narrow or widen closer to the weld cavity 104.

Continuing, the second weld cavity portion 140 is shown having a riser (e.g., top) section 118, and a lower (e.g., bottom) section 120. In the illustrated example, the top section 118 has a trapezoidal cross-sectional shape, relative to a vertical plane (e.g., a centerline plane, as shown). The trapezoidal cross-section defines a set of parallel bases, including a first base 122, with a first base width 124, or a first weld width, and a second base 126, with a second base width 128, or a second weld width 128, and a set of non-parallel legs, including a first leg 130 and a second leg 132. As shown, the trapezoid shape of the top section 118 is inverted with the first base width 124 being greater than the second base width 128, the first base 122 positioned adjacent the tap hole 106, and the second base 126 positioned adjacent the bottom section 120. More generally, a riser section can exhibit a horizontal cross section with a width that increases over a vertical rise, including as shown for the weld cavity 104 and detailed above. In the illustrated example, the vertical rise can correspond an axial direction of the tap hole 106, extending away from the bottom section 120. In some examples, the first and second legs 130, 132 can extend at an angle of about 85 degrees from the first base 122 toward the second base 126, relative to horizontal (or about 15 degrees relative to vertical). However, other angles are contemplated.

Generally, the larger width and cross-sectional area of the weld cavity 104 toward a top of a riser (e.g., adjacent the tap hole 106) provides a space for slag to easily collect away from the copper (or other molten metal). Correspondingly, the copper can more easily settle in the bottom section 120 and the first weld cavity portion 136 to form the desired weld. In some examples, the interface between the top section 118 and the bottom section 120 can be a demarcation between the copper weld material and the slag.

Further, the inverted expansion of the top section 118 provides more space for slag to collect away from the conductors than a weld cavity with vertical or inwardly tapered sides, without requiring an increase in the height of the weld cavity 104, and thus in the overall height of the welding container 100. The corresponding reduction in height of the weld cavity 104 relative to conventional containers, for a given weld volume, can reduce the material and time required for manufacturing the welding container and can therefore lower the manufacturing cost per unit. In other examples, similarly inverted riser configurations are possible, with other particular geometries (e.g., with circular horizontal cross-sections), with similar beneficial effects stemming from the inclusion of a riser cross section that becomes generally wider, moving from the relevant conductor channels, along a vertical rise, toward the tap hole.

FIG. 4 illustrates a cross-section of the welding container 100 taken along line IV-IV of FIG. 1. The second weld cavity portion 140 of the weld cavity 104 is shown having a generally rectangular cross-sectional shape (along the horizontal sectional plane), which reduces in cross-sectional size in the direction toward the bottom section 120 and the first weld cavity portion 136 of the first container piece 134 (i.e., in an opposite direction from a vertical rise).

As stated above, the bottom section 120 and the first weld cavity portion 136 can collectively define a shape of the weld to be formed. Correspondingly, the bottom section 120 or the first weld cavity portion 136 can be configured in a wide variety of shapes to provide a desired weld. In some configurations, indicia can be inset within the bottom section 120 or the first weld cavity portion 136.

In some examples, other configurations of a weld cavity are contemplated. For example, a weld cavity can get wider over a vertical rise from a bottom section, then narrower, and then wider again to define a shape of the weld cavity with a wider mid-section (e.g., a diamond or bulbous cross-sectional shape) as viewed from a cross-sectional view similar to FIG. 3. Further, when viewed from a direction as shown in FIG. 4, the cross-sectional shape of a weld cavity can be round (e.g., circular or oval), triangular, or a shape having more than four sides. Continuing, in some examples, the cross-sectional shape can transition from shape to shape along the width of the weld cavity (e.g., rectangular to round or round to rectangular).

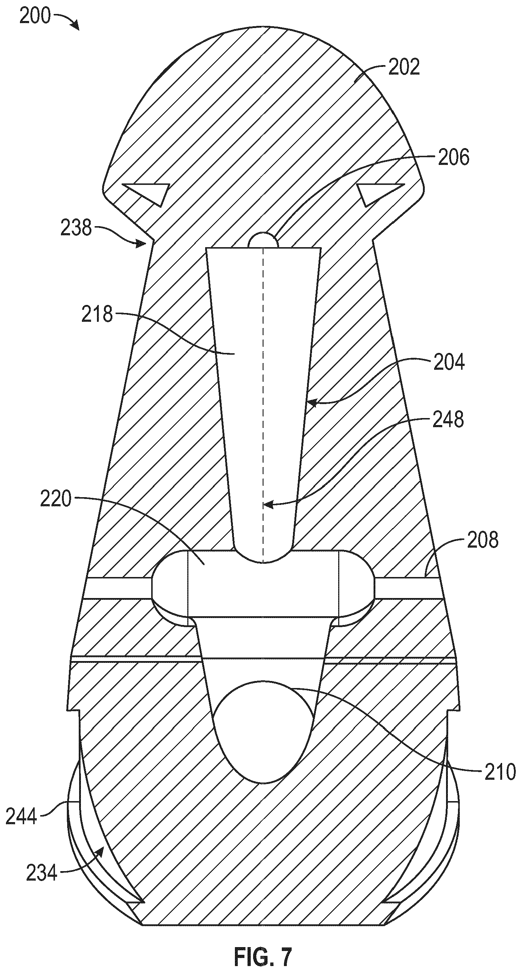

FIGS. 5 through 8 illustrate another example of a welding container 200 according to the disclosure, and also can be used to form a weld on a set of electrical conductors or other objects. In many aspects, the welding container 200 is similar to the welding container 100 described above and similar numbering in the 200 series is used for the welding container 200. For example, the welding container 200 has a crucible chamber 202, a weld cavity 204 with a riser (e.g., top) section 218 and a lower (e.g., bottom) section 220, and a tap hole 206 extending between the crucible chamber 202 and the weld cavity 204 (see FIG. 7). The tap hole 216 has a tap hole width that is smaller than a width of an opening 216 of the crucible chamber 202.

In the illustrated example, the welding container 200 includes a first container piece 234 and a second container piece 238. Further, in some examples, one or more of the first container piece 234 or the second container piece 238 can be integrally formed.

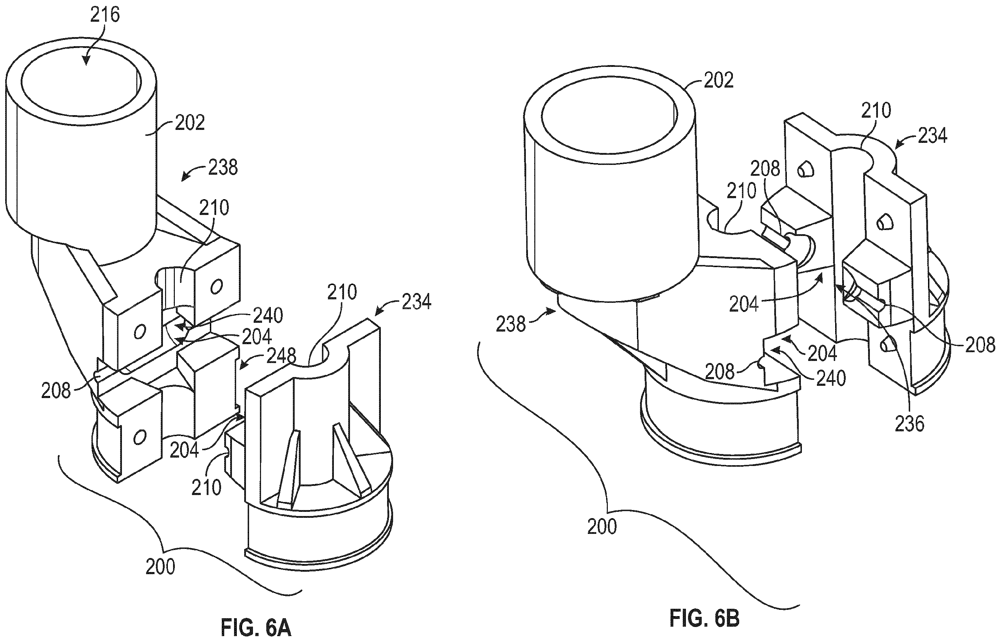

The weld cavity 204 includes a first weld cavity portion 236 defined by (see FIG. 6B) and a second weld cavity portion 240. In particular, the first weld cavity portion 236 is partly defined by protrusions from the first container piece 234 that nest into the second container piece 238. The protrusions also include a corresponding part of the channel 208, which correspondingly offsets the channel 208 laterally apart from the channel 210. However, other configurations are possible.

Similarly to the weld cavity 104, and as shown in FIG. 7 in particular, the lower section 220 of the weld cavity 204 can receive conductors to be welded together, and the riser section 218 can increase in cross-sectional area (and width) in a direction moving away from the lower area. The riser 218 also exhibits an inverted trapezoid-shaped cross-section, as shown in FIG. 7, which is a cross-sectional view taken as indicated by line VII-VII of FIG. 5.

Further, the welding container 200 as shown is a two-piece design, with the first container piece 234 and a second container piece 238 being separable (e.g., and also cut apart) to receive one or more conductors. In particular, the pieces 234, 238 are separable along a vertical split plane 244, and accordingly form a vertical split welding container. However, it is contemplated that other examples may be one-piece containers, may include more than two pieces, or may have other split geometries.

In the illustrated example, because the welding container 200 is a split container, the welding container 200 can be more flexibly placed at a desired welding location along the at least one electrical conductor. For example, in an open configuration of the welding container 200, the first weld cavity portion and the second weld cavity portion 240 are open to receive one or more conductors. Additionally, in an assembled configuration, the first and second container pieces 234, 238 align such that the first and second weld cavity portions collectively define the weld cavity 204 to contain molten metal received from the crucible 216 via the riser 218 to form the desired weld.

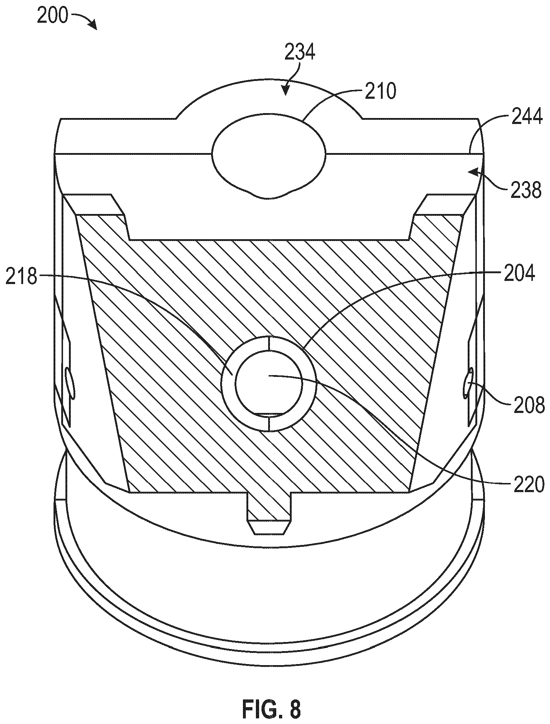

In other aspects, the welding containers 100, 200 also differ from each other. For example, the riser section 218 has a circular cross-sectional shape perpendicular to a centerline thereof, as shown in FIG. 8, which is a cross-sectional view as indicated by line VIII-VIII of FIG. 5. Therefore, the overall shape of the weld cavity 204 is a circular cone. However, it is contemplated that other examples of the disclosure include a weld cavity 204 that is trapezoidal. Additionally, first and second channels 208, 210 extend transverse to each other. For instance, in a preferred example, the second channel 210 is arranged to be a substantially vertical channel and the first channel 208 is arranged to be a substantially horizontal channel (e.g., the second channel is perpendicular to the first channel).

Continuing, the first and second channels 208, 210 are laterally offset from the crucible chamber 202 and the tap hole 206. Correspondingly, in the illustrated example, the weld cavity 204 extends along an angle defined by a centerline 248, as shown in FIG. 7. In some examples, the angle defined by the centerline 248 (see FIGS. 6A and 7) is greater than zero relative vertical (e.g., relative to a central axis of the crucible chamber 202 and the tap hole 206). In other words, the centerline 248 may extend obliquely relative to vertical. In some examples, the angle defined by the centerline 248 is substantially identical to the angle defined by the cross-sectional line VII-VII of FIG. 5 (see also FIG. 7). In other examples, the angle defined by the centerline 248 is perpendicular to the cross-sectional plane of FIG 8 (as also indicated by line VIII-VII in FIG. 5). However, other variations of the angle defined by the centerline 248 are contemplated. With the offset configuration, for example, the second channel 210 can receive a ground rod vertically therethrough without interference from the crucible chamber 202, the tap hole 206, or the riser section 218 of the weld cavity 204. The welding container 200 is also configured to receive an electrode conductor within the first channel 208 to facilitate the exothermic welding of the electrode conductor to the ground rod.

In other examples, other configurations of a welding container are contemplated. For example, a welding container can include differently configured conductor passages to accommodate various components to be welded. In some instances, welding containers may be configured to weld cables, e.g. conductors. Further, in some cases, welding containers may be configured to weld cables that are parallel to one another. For example, in the example configuration shown in FIGS. 1-4, the welding container may be configured to weld cables that are in parallel with one other, as previously discussed. Other welding containers may be configured to weld cables together that are not in parallel. For the example, in the configuration shown in FIGS. 5-8, a welding container may be used to weld tables together that are perpendicular or otherwise oblique relative to each other (e.g., in a "T" configuration), including as previously discussed.

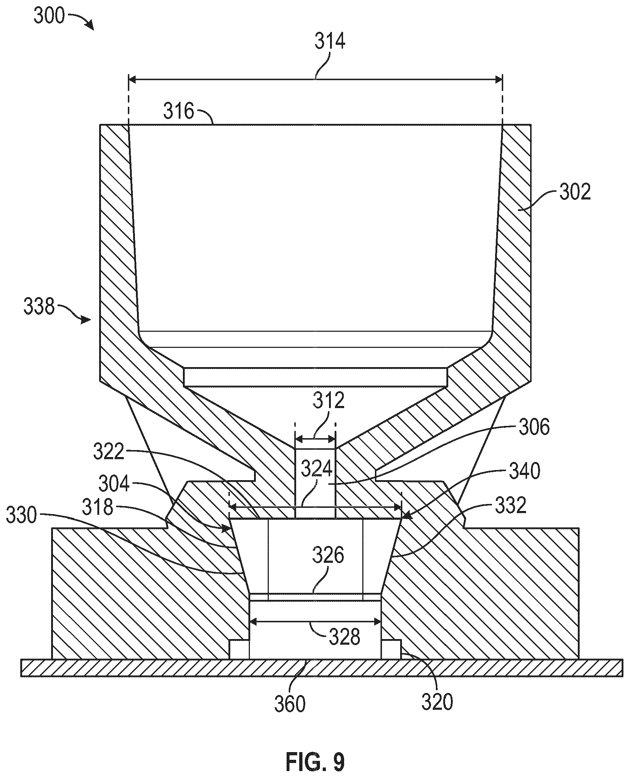

In other instances, welding containers may be configured to weld other metal conductors together. For example, it may be advantageous for a welding container to be configured to weld one or more flat conductors, or to weld one or more conductors to a flat (e.g., horizontal) surface. In this regard, for example, FIG. 9 illustrates another example of a welding container 300 according to some aspects of the disclosure, which can be used to form a weld on a set of electrical conductors or other objects. In particular, FIG. 9 displays a cross-sectional view similar to the view of FIG. 3 for the welding container 100.

In many aspects, the welding container 300 is similar to the welding container 100 described above and similar numbering in the 300 series is used for the welding container 100. For example, the welding container 300 as illustrated includes a welding container piece 338 that defines internal features to contain an exothermic reaction of weld material, convey the resulting molten metal to a weld chamber, and retain the metal in the weld chamber to weld together conductors. In particular, the welding container piece 338 has a crucible chamber 302, a weld cavity 304 with a riser (e.g., top) section 318, and a lower (e.g., bottom) section 320, and a tap hole 306 extending between the crucible chamber 302 and the weld cavity 304. The tap hole 306 has a width 312 that is smaller than a width 314 of an opening 316 of the crucible chamber 302.

The weld cavity 304 is also configured to have an inverted configuration, similar to the weld cavity 104 of FIG. 1. The weld cavity 304 can be at least partly formed by a weld cavity portion 340 defined by the welding container piece 338.

As shown in FIG. 9, the top section 318 may be have a trapezoidal shape along a vertical sectional plane, or may be otherwise inverted to have increasing width over a vertical rise. In such examples, the trapezoid shape of the top section 318 is inverted with a first base width 324 being greater than the second base width 328, as measured for the first base 322 adjacent the tap hole 306, and for the second base 326 adjacent the bottom section 320. Thus, as generally noted above, the weld cavity 304 has a width that increases over a vertical rise (e.g., as may extend along a centerline of the riser section 318 away from the bottom section 320.

In some aspects, however, the example welding container 300 may differ from the welding container 100. For example, the welding container 300 may be used to form a weld on a flat surface 360. As shown in the example configuration of FIG. 9, the flat surface 360 may be a top surface of a flattened electrical conductor, including a grounding plate, a bus bar, or various other types of conductors. Correspondingly, a conductor passage through the container 300 (not show, but, e.g., aligned with the bottom section 320) can intersect with the weld cavity 304 to allow a conductor of various configurations to be welded to the flat surface 360 within the weld cavity 304.

Generally, the welding container 300 may include one or more channels (not shown) that allow one or more conductors of various configurations (e.g., flat conductors) to be inserted into the welding container 300. In particular, one or more channels can intersect with the weld cavity 304 to allow a conductor of various configurations to be welded to the flat surface 360 within the weld cavity 304 (e.g., with a channel aligned with the bottom section 320). As also discussed above, the channel(s) may be horizontal, vertical, parallel, non-parallel or otherwise configured.

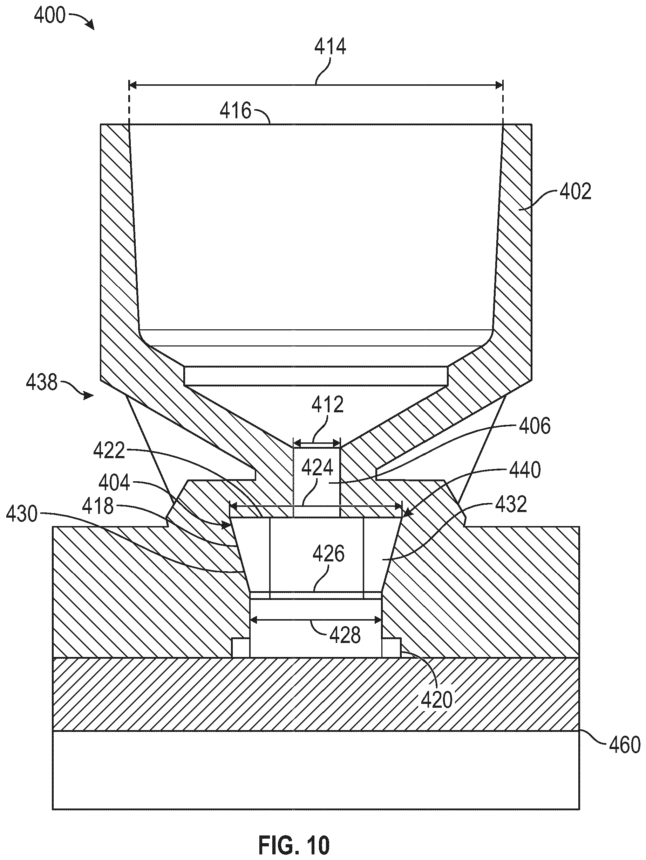

In other instances, welding containers may be configured to weld together components to a pipe, post, or other components with a curved profile. In this regard, FIG. 10 illustrates another example of a welding container 400 according to some aspects of the disclosure, and can be used to form a weld on a set of electrical conductors or other objects. FIG. 10 displays a cross-sectional view of an example configuration of a welding container that is horizontally split, similar to the welding container 100.

In many aspects, the welding container 400 is similar to the welding container 100 described above and similar numbering in the 400 series is used for the welding container 400. For example, the welding container 400 has a weld container piece 438 that defines a crucible chamber 402, and a weld cavity portion 440 of a weld cavity 404 that includes an inverted riser (e.g., top) section 418 and a lower (e.g., bottom) section 420. A tap hole 406 extends between the crucible chamber 402 and the weld cavity 404.

The tap hole 406 has a width 412 that is smaller than a width 414 of an opening 416 of the crucible chamber 402. As noted above, the riser section 418 defines an inverted trapezoid-shaped cross-section, similar to the weld cavity 104 of FIG. 1. In particular, the top section 418 includes a first base 422 with a first, wider base width 424 adjacent the tap hole 406, and a second base 426 with a second, narrower base width 428 adjacent the bottom section 420. A set of non-parallel legs, including a first leg 430 and a second leg 432, extend between the bases 422, 426.

The welding container 400 is shown with the weld container piece 438 to securing a pipe wall 460 or other curved component in communication with the weld cavity 404. It is contemplated that the welding container 400 may be one-piece or a two-piece design.

Generally, the welding container 400 may include one or more channels (not shown) that allow one or more conductors of various configurations (e.g., flat or rounded conductor) to be inserted into the welding container 400. In particular, one or more channels can intersect with the weld cavity 404 to allow a conductor of various configurations to be welded to the pipe wall 460 or other component within the weld cavity 404 (e.g., with a channel aligned with the bottom section 420). As also discussed above, the channel(s) may be horizontal, vertical, parallel, non-parallel or otherwise configured.

Thus, examples of the present invention as defined in the appended claims provide an improved weld cavity configuration for exothermic welding systems. For example, the inverted configuration of a riser section can aid in more efficiently and effectively separating the slag from the molten copper to ensure a better more consistent weld.

## Claims

1. An exothermic welding container comprising:
a weld cavity (104) with a top section (118) and a bottom section (120);
one or more conductor channels (108, 110) that intersect the weld cavity; and
a tap hole (106) that intersects the top section of the weld cavity to convey molten metal into the weld cavity by gravity to weld one or more conductors received in the one or more conductor channels;
a crucible chamber (102), with an upper opening (116) to receive weld material for exothermic reaction within the crucible chamber;
an upper container piece (138) that defines at least the tap hole (106), the crucible chamber (102), and the top section (118) of the weld cavity (104);
a lower container piece (134) that further defines the weld cavity; and
the top section having a width (124) that increases over a vertical rise away from the bottom section to extend wider than the tap hole,
wherein the tap hole (106) extends from the crucible chamber to the top section (118) of the weld cavity (104),
wherein the upper and lower container pieces (138, 134) are separable from each other along a substantially-horizontal split plane that intersects the weld cavity (104),
wherein the tap hole (106) has a tap hole diameter (112), the tap hole diameter (112) being smaller than the width (124), and
wherein the upper container piece (138) is integrally formed and the lower container piece (134) is integrally formed.

2. The exothermic welding container of claim 1, wherein the bottom section (120) is configured to retain the molten metal around conductors received into the weld cavity (104) to provide a weld with a first weld width; and
the top section (118) is configured to receive slag that is floating on the molten metal across a greater width than the first weld width.

3. The exothermic welding container of any of the preceding claims, wherein the exothermic welding container (100) is a one-piece welding container.

4. The exothermic welding container of claim 1 or claim 2, wherein the weld cavity (104) is defined by a first container piece (134) and a second container piece (138) that are separable along one or more split planes (144).

5. The exothermic welding container of claim 4, wherein the one or more split planes (144) include a substantially horizontal split plane that intersects the weld cavity (104) and at least one conductor channel of the one or more conductor channels (108, 110).

6. The exothermic welding container of any of claims 1 through 4, wherein the tap hole (106) is laterally offset from at least one conductor channel of the one or more conductor channels (108, 110).

7. The exothermic welding container of claim 6, wherein the top section (118) of the weld cavity (104) extends obliquely to vertical between the tap hole (106) and the at least one conductor channel.

8. The exothermic welding container of any of the preceding claims, wherein the top section (118) of the weld cavity (104) includes a riser section with a trapezoidal cross-sectional shape as viewed perpendicularly to vertical.

9. The exothermic welding container of claim 8, wherein the lower section (120) of the weld cavity (104) includes a rectangular cross-sectional shape as viewed perpendicularly to vertical.

10. A method of forming an exothermic weld, the method comprising:
providing a first container piece (134), integrally formed, that internally defines a first weld cavity portion (136); and
providing a second container piece (138), integrally formed, that internally defines:
a crucible chamber (102), with an upper opening (116) to receive weld material for exothermic reaction within the crucible chamber;
a tap hole (106) that extends from a lower end of the crucible chamber and defines a tap hole width (112); and
a second weld cavity portion (138), including a riser section (118) and a lower section (120), the riser section extending from a lower end of the tap hole toward the lower section with an inward taper from an upper riser width toward the lower section;
separating the first and second integrally formed container pieces into an open configuration, in which at least one of the first weld cavity portion or the second weld cavity portion is open to receive one or more conductors;
aligning the one or more conductors with the at least one of the first weld cavity portion or the second weld cavity portion;
moving the first and second integrally formed container pieces to an assembled configuration, in which the first and second integrally formed pieces are aligned so that the first and second weld cavity portions collectively define a weld cavity (104) of the exothermic welding container (100) to receive and contain molten metal from reaction of the weld material in the crucible chamber, with the one or more conductors passing through one or more conductor channels (108, 110) that extend into one or more of the first container piece or the second container piece to intersect the weld cavity; and
causing an exothermic reaction of the weld material in the crucible chamber, to form a weld within the weld cavity.

11. The method of claim 10, wherein the first container piece (134) is a lower container piece and the second container piece (138) is an upper container piece; and
wherein separating the first and second container pieces into the open configuration includes separating the first and second container pieces along a substantially-horizontal split plane, and optionally or preferably wherein the substantially-horizontal split plane intersects the one or more conductor channels (108, 110) and the weld cavity (104).

12. The method of either of claim 10 or 11, wherein forming the weld within the weld cavity (104) provides a weld with a first weld width and causes the riser section (118) to receive slag across a greater width than the first weld width, and optionally or preferably wherein the riser section of the weld cavity has a trapezoidal cross-sectional shape as viewed perpendicularly to vertical.

## Patentansprüche

1. Exothermer Schweißbehälter, umfassend:
einen Schweißhohlraum (104) mit einem oberen Abschnitt (118) und einem unteren Abschnitt (120);
einen oder mehrere Leiterkanäle (108, 110), die den Schweißhohlraum schneiden; und
eine Gießöffnung (106), die den oberen Abschnitt des Schweißhohlraums schneidet, um geschmolzenes Metall durch Schwerkraft zu dem Schweißhohlraum zu leiten, um einen oder mehrere Leiter zu schweißen, die in dem einen oder den mehreren Leiterkanälen aufgenommen sind;
eine Tiegelkammer (102) mit einer oberen Öffnung (116) zum Aufnehmen von Schweißmaterial für eine exotherme Reaktion innerhalb der Tiegelkammer;
ein oberes Behälterteil (138), das mindestens die Gießöffnung (106), die Tiegelkammer (102) und den oberen Abschnitt (118) des Schweißhohlraums (104) definiert;
ein unteres Behälterteil (134), das den Schweißhohlraum weiter definiert; und
wobei der obere Abschnitt eine Breite (124) aufweist, die über einen vertikalen Anstieg vom unteren Abschnitt weg zunimmt, um sich breiter als die Gießöffnung zu erstrecken,
wobei sich die Gießöffnung (106) von der Tiegelkammer bis zum oberen Abschnitt (118) des Schweißhohlraums (104) erstreckt,
wobei das obere und das untere Behälterteil (138, 134) entlang einer im Wesentlichen horizontalen Trennebene, die den Schweißhohlraum (104) schneidet, voneinander trennbar sind,
wobei die Gießöffnung (106) einen Gießöffnungsdurchmesser (112) aufweist, wobei der Gießöffnungsdurchmesser (112) kleiner ist als die Breite (124), und
wobei das obere Behälterteil (138) integral ausgebildet ist und das untere Behälterteil (134) integral ausgebildet ist.

2. Exothermer Schweißbehälter nach Anspruch 1, wobei der untere Abschnitt (120) so ausgebildet ist, dass er das geschmolzene Metall um in den Schweißhohlraum (104) aufgenommene Leiter herum zurückhält, um eine Schweißnaht mit einer ersten Schweißnahtbreite zu erzeugen; und
der obere Abschnitt (118) so ausgebildet ist, dass er Schlacke aufnimmt, die auf dem geschmolzenen Metall über eine größere Breite als die erste Schweißnahtbreite schwimmt.

3. Exothermer Schweißbehälter nach einem der vorstehenden Ansprüche, wobei der exotherme Schweißbehälter (100) ein einteiliger Schweißbehälter ist.

4. Exothermer Schweißbehälter nach Anspruch 1 oder Anspruch 2, wobei der Schweißhohlraum (104) durch ein erstes Behälterteil (134) und ein zweites Behälterteil (138) definiert ist, die entlang einer oder mehrerer Trennebenen (144) trennbar sind.

5. Exothermer Schweißbehälter nach Anspruch 4, wobei die eine oder mehreren Trennebenen (144) eine im Wesentlichen horizontale Trennebene einschließen, die den Schweißhohlraum (104) und mindestens einen Leiterkanal der einen oder mehreren Leiterkanäle (108, 110) schneidet.

6. Exothermer Schweißbehälter nach einem der Ansprüche 1 bis 4, wobei die Gießöffnung (106) seitlich von mindestens einem Leiterkanal der einen oder mehreren Leiterkanäle (108, 110) versetzt ist.

7. Exothermer Schweißbehälter nach Anspruch 6, wobei sich der obere Abschnitt (118) des Schweißhohlraums (104) schräg zur Vertikalen zwischen der Gießöffnung (106) und dem mindestens einen Leiterkanal erstreckt.

8. Exothermer Schweißbehälter nach einem der vorstehenden Ansprüche, wobei der obere Abschnitt (118) des Schweißhohlraums (104) einen Steigabschnitt mit einer trapezförmigen Querschnittsform einschließt, wenn man senkrecht zur Vertikalen betrachtet.

9. Exothermer Schweißbehälter nach Anspruch 8, wobei der untere Abschnitt (120) des Schweißhohlraums (104) senkrecht zur Vertikalen gesehen eine rechteckige Querschnittsform einschließt.

10. Verfahren zum Herstellen einer exothermen Schweißverbindung, wobei das Verfahren umfasst:
Bereitstellen eines ersten Behälterteils (134), das integral ausgebildet ist und im Inneren einen ersten Schweißhohlraumabschnitt (136) definiert; und
Bereitstellen eines zweiten Behälterteils (138), das integral ausgebildet ist und im Inneren definiert:
eine Tiegelkammer (102) mit einer oberen Öffnung (116) zum Aufnehmen von Schweißmaterial für eine exotherme Reaktion innerhalb der Tiegelkammer;
eine Gießöffnung (106), die sich von einem unteren Ende der Tiegelkammer erstreckt und eine Gießöffnungsbreite (112) definiert; und
einen zweiten Schweißhohlraumabschnitt (138), der einen Steigabschnitt (118) und einen unteren Abschnitt (120) einschließt, wobei sich der Steigabschnitt von einem unteren Ende der Gießöffnung in Richtung des unteren Abschnitts erstreckt und sich von einer oberen Steigbreite in Richtung des unteren Abschnitts nach innen verjüngt;
Trennen des ersten und des zweiten integral ausgebildeten Behälterteils in eine offene Konfiguration, in der mindestens einer des ersten Schweißhohlraumabschnitts oder des zweiten Schweißhohlraumabschnitts offen ist, um einen oder mehrere Leiter aufzunehmen;
Ausrichten des einen oder der mehreren Leiter mit mindestens einem des ersten Schweißhohlraumabschnitts oder des zweiten Schweißhohlraumabschnitts;
Bewegen des ersten und des zweiten integral ausgebildeten Behälterteils in eine zusammengebaute Konfiguration, in der das erste und das zweite integral ausgebildete Teil so ausgerichtet sind, dass der erste und der zweite Schweißhohlraumabschnitt gemeinsam einen Schweißhohlraum (104) des exothermen Schweißbehälters (100) definieren, um geschmolzenes Metall aus einer Reaktion des Schweißmaterials in der Tiegelkammer aufzunehmen und zu enthalten, wobei der eine oder die mehreren Leiter durch einen oder mehrere Leiterkanäle (108, 110) verlaufen, die sich in das erste Behälterteil oder das zweite Behälterteil erstrecken, um den Schweißhohlraum zu schneiden; und
Bewirken einer exothermen Reaktion des Schweißmaterials in der Tiegelkammer, um eine Schweißnaht innerhalb des Schweißhohlraums zu bilden.

11. Verfahren nach Anspruch 10, wobei das erste Behälterteil (134) ein unteres Behälterteil ist und das zweite Behälterteil (138) ein oberes Behälterteil ist; und
wobei ein Trennen des ersten und des zweiten Behälterteils in die offene Konfiguration ein Trennen des ersten und des zweiten Behälterteils entlang einer im Wesentlichen horizontalen Trennebene einschließt, und wobei optional oder vorzugsweise die im Wesentlichen horizontale Trennebene den einen oder die mehreren Leiterkanäle (108, 110) und den Schweißhohlraum (104) schneidet.

12. Verfahren nach Anspruch 10 oder 11, wobei ein Bilden der Schweißnaht innerhalb des Schweißhohlraums (104) eine Schweißnaht mit einer ersten Schweißnahtbreite bereitstellt und bewirkt, dass der Steigabschnitt (118) Schlacke über eine größere Breite als die erste Schweißnahtbreite aufnimmt, und wobei optional oder vorzugsweise der Steigabschnitt des Schweißhohlraums eine trapezförmige Querschnittsform aufweist, wenn man senkrecht zur Vertikalen betrachtet.

## Revendications

1. Conteneur de soudage exothermique comprenant :
une cavité de soudure (104) ayant une section de sommet (118) et une section de fond (120) ;
un ou plusieurs canaux de conducteur (108, 110) qui entrecoupent la cavité de soudure ; et
un trou de coulée (106) qui entrecoupe la section de sommet de la cavité de soudure pour transporter du métal fondu dans la cavité de soudure par gravité pour souder un ou plusieurs conducteurs reçus dans les un ou plusieurs canaux de conducteur ;
une chambre de creuset (102), avec une ouverture supérieure (116) pour recevoir un matériau de soudure pour une réaction exothermique à l'intérieur de la chambre de creuset ;
une pièce supérieure (138) de conteneur qui définit au moins le trou de coulée (106), la chambre de creuset (102) et la section de sommet (118) de la cavité de soudure (104) ;
une pièce inférieure (134) de conteneur qui définit en outre la cavité de soudure ; et
la section de sommet présentant une largeur (124) qui augmente sur une montée verticale à l'opposé de la section de fond pour s'étendre de manière plus large que le trou de coulée,
dans lequel le trou de coulée (106) s'étend de la chambre de creuset à la section de sommet (118) de la cavité de soudure (104),
dans lequel les pièces supérieure et inférieure (138, 134) de conteneur sont séparables l'une de l'autre le long d'un plan de division sensiblement horizontal qui entrecoupe la cavité de soudure (104),
dans lequel le trou de coulée (106) présente un diamètre (112) de trou de coulée, le diamètre (112) de trou de coulée étant plus petit que la largeur (124), et
dans lequel la pièce supérieure (138) de conteneur est formée d'un seul tenant et la pièce inférieure (134) de conteneur est formée d'un seul tenant.

2. Conteneur de soudage exothermique selon la revendication 1, dans lequel la section de fond (120) est configurée pour retenir le métal fondu autour de conducteurs reçus dans la cavité de soudure (104) pour fournir une soudure ayant une première largeur de soudure ; et
la section de sommet (118) est configurée pour recevoir un laitier qui flotte sur le métal fondu sur une largeur supérieure à la première largeur de soudure.

3. Conteneur de soudage exothermique selon l'une quelconque des revendications précédentes, dans lequel le conteneur de soudage exothermique (100) est un conteneur de soudage monobloc.

4. Conteneur de soudage exothermique selon la revendication 1 ou la revendication 2, dans lequel la cavité de soudure (104) est définie par une première pièce (134) de conteneur et une deuxième pièce (138) de conteneur qui sont séparables le long d'un ou plusieurs plans de division (144).

5. Conteneur de soudage exothermique selon la revendication 4, dans lequel les un ou plusieurs plans de division (144) incluent un plan de division sensiblement horizontal qui entrecoupe la cavité de soudure (104) et au moins un canal de conducteur des un ou plusieurs canaux de conducteur (108, 110).

6. Conteneur de soudage exothermique selon l'une quelconque des revendications 1 à 4, dans lequel le trou de coulée (106) est décalé latéralement par rapport à au moins un canal de conducteur des un ou plusieurs canaux de conducteur (108, 110).

7. Conteneur de soudage exothermique selon la revendication 6, dans lequel la section de sommet (118) de la cavité de soudure (104) s'étend obliquement par rapport à la verticale entre le trou de coulée (106) et l'au moins un canal de conducteur.

8. Conteneur de soudage exothermique selon l'une quelconque des revendications précédentes, dans lequel la section de sommet (118) de la cavité de soudure (104) inclut une section de montée ayant une forme en coupe transversale trapézoïdale comme observé perpendiculairement à la verticale.

9. Conteneur de soudage exothermique selon la revendication 8, dans lequel la section inférieure (120) de la cavité de soudure (104) inclut une forme en coupe transversale rectangulaire comme observé perpendiculairement à la verticale.

10. Procédé de formation d'une soudure exothermique, le procédé comprenant :
la fourniture d'une première pièce (134) de conteneur, formée d'un seul tenant, qui définit internement une première portion (136) de cavité de soudure ; et
la fourniture d'une deuxième pièce (138) de conteneur, formée d'un seul tenant, qui définit de manière interne :
une chambre de creuset (102), avec une ouverture supérieure (116) pour recevoir un matériau de soudure pour une réaction exothermique à l'intérieur de la chambre de creuset ;
un trou de coulée (106) qui s'étend à partir d'une extrémité inférieure de la chambre de creuset et définit une largeur (112) de trou de coulée ; et
une deuxième portion (138) de cavité de soudure, incluant une section de montée (118) et une section inférieure (120), la section de montée s'étendant d'une extrémité inférieure du trou de coulée vers la section inférieure avec un rétrécissement vers l'intérieur à partir d'une largeur de montée supérieure vers la section inférieure ;
la séparation des première et deuxième pièces de conteneur formées d'un seul tenant en une configuration ouverte, dans laquelle au moins une de la première portion de cavité de soudure ou de la seconde portion de cavité de soudure est ouverte pour recevoir un ou plusieurs conducteurs ;
l'alignement des un ou plusieurs conducteurs avec l'au moins une de la première portion de cavité de soudure ou de la deuxième portion de cavité de soudure ;
le passage des première et deuxième pièces de conteneur formées d'un seul tenant vers une configuration assemblée, dans laquelle les première et deuxième pièces formées d'un seul tenant sont alignées de sorte que les première et deuxième portions de cavité de soudure définissent collectivement une cavité de soudure (104) du conteneur de soudage exothermique (100) pour recevoir et contenir du métal fondu provenant d'une réaction du matériau de soudure dans la chambre de creuset, avec les un ou plusieurs conducteurs traversant un ou plusieurs canaux de conducteur (108, 110) qui s'étendent dans une ou plusieurs de la première pièce de conteneur ou de la deuxième pièce de conteneur pour entrecouper la cavité de soudure ; et
le fait de provoquer une réaction exothermique du matériau de soudure dans la chambre de creuset, pour former une soudure à l'intérieur de la cavité de soudure.

11. Procédé selon la revendication 10, dans lequel la première pièce (134) de conteneur est une pièce inférieure de conteneur et la deuxième pièce (138) de conteneur est une pièce supérieure de conteneur ; et
dans lequel la séparation des première et deuxième pièces de conteneur dans la configuration ouverte inclut la séparation des première et deuxième pièces de conteneur le long d'un plan de division sensiblement horizontal, et facultativement ou préférablement dans lequel le plan de division sensiblement horizontal entrecoupe les un ou plusieurs canaux de conducteur (108, 110) et la cavité de soudure (104).

12. Procédé selon l'une de la revendication 10 ou la revendication 11, dans lequel le formage de la soudure à l'intérieur de la cavité de soudure (104) fournit une soudure ayant une première largeur de soudure et amène la section de montée (118) à recevoir un laitier sur une largeur supérieure à la première largeur de soudure, et facultativement ou préférablement dans lequel la section de montée de la cavité de soudure présente une forme en coupe transversale trapézoïdale comme observé perpendiculairement à la verticale.
